Europäisches Patentamt

European Patent Office

Office européen des brevets

(19)

(11) Publication number: **0 457 186 B1**

(12) **EUROPEAN PATENT SPECIFICATION**

(45) Date of publication of patent specification: **12.10.94**

(51) Int. Cl.5: **B60R 16/02**, C22C 9/02, C22F 1/08, H01B 1/02

(21) Application number: **91107512.5**

(22) Date of filing: **08.05.91**

(54) **Wire conductor for harness.**

(30) Priority: **10.05.90 JP 121968/90**
     **28.12.90 JP 409162/90**

(43) Date of publication of application:
     **21.11.91 Bulletin 91/47**

(45) Publication of the grant of the patent:
     **12.10.94 Bulletin 94/41**

(84) Designated Contracting States:
     **DE FR GB**

(56) References cited:
     **EP-A- 0 190 386**
     **EP-A- 0 331 182**

     **PATENT ABSTRACTS OF JAPAN vol. 14, no. 246 (C-722)(4189) May 25, 1990& JP-A-266 131**

     **PATENT ABSTRACTS OF JAPAN vol. 10, no. 318 (C-381)(2374) October 29, 1986 & JP-A-61 127 840**

(73) Proprietor: **SUMITOMO ELECTRIC INDUSTRIES, LIMITED**
     **5-33, Kitahama 4-chome**
     **Chuo-ku**
     **Osaka 541 (JP)**

     Proprietor: **Sumitomo Wiring System, Ltd.**
     **1-14, Nishisuehiro-cho**
     **Yokkaichi-shi Mie-ken (JP)**

(72) Inventor: **Sawada, Kazuo, c/o Osaka Works of Sumitomo**
     **Electric Ind., Ltd.,**
     **1-3, Shimaya 1-chome**
     **Konohana-ku, Osaka (JP)**
     Inventor: **Fujii, Atsuhiko, c/o Osaka Works of Sumitomo**
     **Electric Ind., Ltd.,**
     **1-3, Shimaya 1-chome**
     **Konohana-ku, Osaka (JP)**
     Inventor: **Nakai, Yoshihiro, c/o Osaka Works of Sumitomo**
     **Electric Ind., Ltd.,**
     **1-3, Shimaya 1-chome**
     **Konohana-ku, Osaka (JP)**

PATENT ABSTRACTS OF JAPAN vol. 14, no. 280 (C-729)(4223) June 18, 1990& JP-A-285 330 (MITSUI MINING AND SMELTING CO LTD ) March 26, 1990

PATENT ABSTRACTS OF JAPAN vol. 9, no. 160 (C-289)(1883) July 4, 1985& JP-A-60 33 328

METAL PROGRESS. vol. 103, no. 2, February 1, 1973, METALS PARK, OHIO US pages 66-69; COPPER DEVELOPMENT ASSOC.: 'PROPERTIES AND APPLICATIONS OF WIDE-LY USED WROUGHT COPPER AND COPPER ALLOYS'

Inventor: **Ohkubo, Naoyuki, c/o Osaka Works of Sumitomo Electric Ind., Ltd., 1-3, Shimaya 1-chome Konohana-ku, Osaka (JP)**
Inventor: **Shiraishi, Hajime, c/o Osaka Works of Sumitomo Electric Ind., Ltd., 1-3, Shimaya 1-chome Konohana-ku, Osaka (JP)**
Inventor: **Ono, Fumio, c/o Osaka Works of Sumitomo Electric Ind., Ltd., 1-3, Shimaya 1-chome Konohana-ku, Osaka (JP)**
Inventor: **Matsuda, Katsushi, c/o Osaka Works of Sumitomo Electric Ind., Ltd., 1-3, Shimaya 1-chome Konohana-ku, Osaka (JP)**
Inventor: **Tsuji, Kazunori, c/o Suzuka Works of Sumitomo Wiring Systems, Ltd., 1820, Nakanoike Mikkaichi-cho, Suzuka-shi, Mie-ken (JP)**

(74) Representative: **Herrmann-Trentepohl, Werner, Dipl.-Ing. et al Patentanwälte Herrmann-Trentepohl, Kirschner, Grosse, Bockhorni & Partner Forstenrieder Allee 59 D-81476 München (DE)**

**Description**

BACKGROUND OF THE INVENTION

Field of the Invention

The present invention relates to a wire conductor for a harness, which is applicable to a wire harness for an automobile, for example.

Description of the Background Art

With recent improvement of performance, an automobile is wired in a number of portions such as those of various control circuits, with strong requirement for reliability. On the other hand, a lightweight automobile is increasingly required in view of energy saving etc.

In general, a wire conductor for wiring an automobile is mainly prepared from a stranded wire which is obtained by braiding annealed copper wires defined under JIS C 3102 or those plated with tin. Such a stranded wire is concentrically coated with an insulating material such as vinyl chloride, bridged vinyl or bridged polyethylene, to form a wire.

In automobile wiring circuits, the rate of signal current circuits for control etc., in particular, is increased in recent years. A wire for such circuits is formed by a conductor whose diameter is in excess of an electrically required level for maintaining mechanical strength, in spite of sufficient current carrying capacity.

In order to reduce the weight of such a wire, an attempt has been made to prepare its conductor from aluminum (including alloy).

In general, however, aluminium is so inferior in strength that it is necessary to increase the outer diameter of the conductor or the number of stranded wires, in order to attain sufficient strength. Consequently, the amount of the insulating material is increased to require a large wiring space. Thus, the weight of the wire cannot be sufficiently reduced and the cost for the insulating material is increased.

On the other hand EP-A-0331182 discloses a compact-stranded wire conductor made by circularly compressing peripheral element wires provided around a central element wire in which the central element wire is selected to have a hardness higher than that of the peripheral element wire in order to achieve higher strengths for smaller diameters of the wire conductor. Although this wire conductor provides improved strength, no outer diameters of the conductor smaller than 0,5 mm can be obtained.

Therefore there is a need to provide wire conductors with smaller diameters than 0,5 mm and a comparable or improved strength.

In this regard JP-A-63-214603 discloses a Cu alloy with improved strength, elasticity and electric conductivity and providing high press formability and stress relaxation resistance by incorporating e. g. 0,123 % Sn and 0,005 to 1,05 % of P.

Even with the improved characteristics of this Cu alloy no impact resistance of a stranded wire conductor with no disjoining at the cut ends of the stranded and compressed wire could be obtained.

SUMMARY OF THE INVENTION

An object of the present invention is to provide a wire conductor for a harness whose breaking force is equivalent to that of a conventional harness wire even if its weight is reduced with reduction in diameter, which is hardly broken by an impact and excellent in straightness with no end disjointing of a cut stranded wire.

The inventive wire conductor for a harness is formed by a stranded wire which is obtained by braiding strands of a copper alloy containing 0.2 to 10 percent by weight of Sn, with a conductor sectional area of 0.03 to 0.3 mm$^2$.

According to the present invention, the conductor sectional area is set in the range of 0.03 to 0.3 mm$^2$ since it is difficult to compress a terminal in harness working if the value is less than 0.03 mm$^2$, while the weight of the wire conductor cannot be sufficiently reduced if the value exceeds 0.3 mm$^2$.

According to the present invention, the stranded wire is preferably circularly compressed after the same is formed by braiding strands having circular sections.

The inventive wire conductor for a harness is formed not by a solid wire but by a stranded wire, in order to attain improvement in reliability against repeated bending.

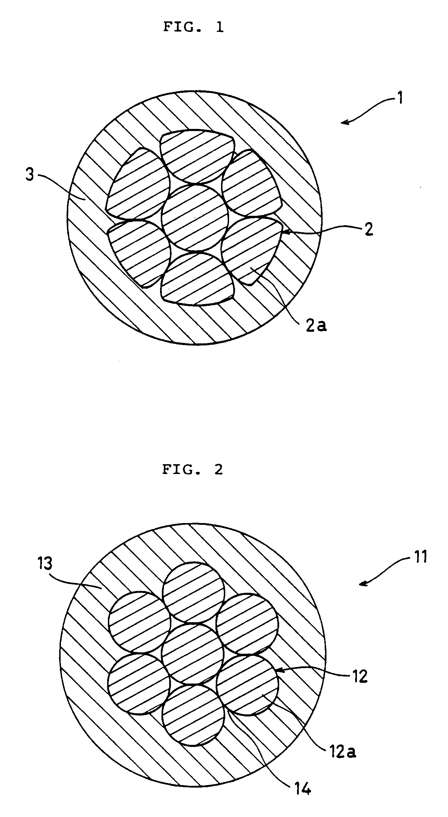

Fig. 1 is a sectional view showing a harness wire according to an embodiment of the present invention, which comprises a circularly compressed stranded wire. Fig. 2 is a sectional view showing a harness wire

3

comprising a stranded wire which is not circularly compressed.

Referring to Fig. 1, a harness wire 1 comprises a stranded wire 2, which is so circularly compressed that outer peripheral surfaces of outer strands 2a define a substantially circular configuration as a whole. An insulating film 2 is provided along the outer periphery of the circularly compressed stranded wire 2.

Referring to Fig. 2, a harness wire 11 comprises a stranded wire 1, which is formed by simply braiding strands 12a, and an insulating film 13 provided around the stranded wire 12. The insulating film 13 also fills up clearances 14 between the strands 12a. However, such clearances 14 may not be filled up with the insulating film 13, since these portions are not concerned with insulability. Due to such excessive portions filling up the clearances 14, the amount of the material for the insulating film 13 is increased and the weight of the wire 11 cannot be sufficiently reduced.

On the other hand, less clearances are defined between the strands 2a of the harness wire 1 shown in Fig. 1, whereby the amount of the material for the insulating film 3 can be reduced to reduce the weight of the harness wire 1. In view of the same sectional area, further, the outer diameter of the wire 1 can be reduced due to the small clearances. In addition, end disjointing can be suppressed by circularly compressing the stranded wire 2. Besides, the wire 1 can be improved in straightness.

Strands employed in the present invention are prepared from a copper alloy containing 0.2 to 10 percent by weight of Sn, while the same may be prepared from phosphor bronze containing not more than 0.5 percent by weight of phosphorus.

According to a first embodiment of the present invention, the Sn content is in a range of 0.2 to 2.5 percent by weight.

In the first embodiment, the Sn content is set in the range of 0.02 to 2.5 percent by weight since an effect of improvement of breaking force is reduced if the Sn content is less than 0.2 percent by weight, while conductivity drops below 50 % and the wire may enter an unpreferable state depending on the circuit if the Sn content exceeds 2.5 percent by weight.

According to the first embodiment of the present invention, the copper material contains 0.2 to 2.5 percent by weight of Sn and has a spring property as compared with a generally used annealed copper material. Thus, the copper material may cause a problem of end disjointing with difficulty in crimping of terminal fittings. However, such end disjointing can be suppressed by circularly compressing the stranded wire. Further, the wire conductor can be improved in straightness by such circular compression.

It has been found that impact resistance is also improved by such circular compression.

In the first embodiment of the present invention, further, the circularly compressed stranded wire is preferably heat treated so that its tensile strength is in a range of 80 to 95 % of that before the heat treatment. Impact resistance can be further improved and disjointing of the stranded wire can be further suppressed by such heat treatment. While breaking force in tensile strength is lowered by this heat treatment, it is preferable to control the lowered breaking force in a range of 80 to 95 % of that before the heat treatment, as hereinabove described. If the breaking force after the heat treatment is larger than 95 % of that before the heat treatment, disjointing or wire deformation may be caused due to insufficient improvement of an impact value. If the tensile strength drops below 80 % of that before the heat treatment, on the other hand, the breaking force is extremely lowered to lose an effect of alloying for improving the breaking force with a prescribed content of Sn.

Such heat treatment is preferably performed in a temperature range of 180 to 350 °C. If the temperature is less than 180 °C, the effect of improving the impact value may not be sufficiently attained, while the breaking force may be significantly lowered if the temperature exceeds 350 °C.

The heat treatment time is preferably in excess of 10 minutes. If the heat treatment time is less than 10 minutes, the effect of improving the impact value may not be sufficiently attained.

According to a second embodiment of the present invention, the Sn content is 2 to 10 percent by weight.

In the second embodiment, the Sn content is set to be at least 2 percent by weight, in order to improve breaking force. If the Sn content exceeds 10 percent by weight, on the other hand, it is impossible to attain mass production with ordinary steps while wire deformation and end disjointing cannot be suppressed even if heat treatment is performed.

In the second embodiment of the present invention, the stranded wire is preferably heat treated so that its tensile strength is in a range of 30 to 60 % as compared with that before the heat treatment.

Due to such heat treatment, impact resistance can be further improved and disjointing of the stranded wire can be further suppressed. While breaking force in tensile strength is lowered by this heat treatment, it is preferable to control the lowered breaking force in a range of 30 to 60 % of that before the heat treatment. If the breaking force after the heat treatment is larger than 60 % of that before the heat treatment, impact resistance cannot be sufficiently improved, and a problem of disjointing or wire

4

deformation may be caused. If the tensile strength drops below 30 % of that before the heat treatment, on the other hand, breaking force is significantly lowered to lose an effect of alloying for improving breaking force with a prescribed content of Sn.

Such heat treatment is preferably performed in a temperature range of 180 to 500°C. If the heat treatment temperature is less than 180°C, the effect of improving the impact value may not be sufficiently attained, while the breaking force may be extremely lowered if the heat treatment temperature exceeds 500°C.

The heat treatment time is preferably in excess of 10 minutes. If the heat treatment time is less than 10 minutes, the effect of improving the impact value may not be sufficiently attained.

As hereinabove described, the inventive wire conductor for a harness has high breaking force and a high impact value, with excellent wire straightness and small end disjointing. Thus, the weight of the inventive wire conductor for a harness can be reduced as compared with the conventional wire.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a sectional view showing a wire for a harness comprising a stranded wire which is circularly compressed after the same is formed by braiding strands having circular sections; and
Fig. 2 is a sectional view showing a wire for a harness comprising a stranded wire which is not circularly compressed.

DESCRIPTION OF THE PREFERRED EMBODIMENTS

Example I according to the first embodiment of the present invention is now described.

Example I

Samples were prepared from alloys having Sn contents shown in Table 1. For each sample, seven strands were braided to form a stranded wire. Except for those of non-compressed samples, the stranded wires were passed through holes of dies, to be circularly compressed. Further, the compressed stranded wires were heat treated under heat treatment conditions shown in Table 1. As to the conventional sample No. 11, generally used annealed copper wires were braided to form a stranded wire.

Table 1 also shows conductivity values (IACS, %), breaking force retention rates (%) around heat treatment, breaking force values (kgf), impact values (kg•m), weight values (g/m), and states of wire straightness and end disjointing, which were measured or evaluated as to the stranded wires.

5

Table 1

| | No. | Sn Content (wt.%) | Strand Diameter (mm) | Compression | Heat Treatment Condition | Conductivity (%) | Breaking Force Retention Rate (%) | Breaking Force (kgf) | Impact Value (kg m) | Weight | Wire Straightness | End Disjointing |
|---|---|---|---|---|---|---|---|---|---|---|---|---|
| Inventive Sample | 1 | 0.5 | 0.18 | Yes | 220°Cx2H | 63 | 92 | 13.0 | 0.5 | 1.6 | excellent | None |
| | 2 | 1.8 | 0.18 | Yes | 250°Cx2H | 38 | 91 | 14.2 | 0.6 | 1.6 | excellent | None |
| | 3 | 1.5 | 0.18 | Yes | 250°Cx2H | 42 | 90 | 13.7 | 0.5 | 1.6 | excellent | None |
| | 4 | 0.3 | 0.18 | Yes | 250°Cx2H | 80 | 83 | 12.0 | 0.5 | 1.6 | excellent | None |
| | 5 | 2.1 | 0.18 | Yes | 250°Cx2H | 35 | 93 | 14.5 | 0.6 | 1.6 | excellent | None |
| | 6 | 0.9 | 0.18 | Yes | 250°Cx2H | 50 | 86 | 12.8 | 0.5 | 1.6 | excellent | None |
| | 7 | 2.4 | 0.18 | Yes | 250°Cx2H | 32 | 94 | 16.0 | 0.8 | 1.6 | excellent | None |
| | 8 | 0.3 | 0.23 | Yes | 250°Cx2H | 80 | 83 | 14.8 | 0.6 | 2.6 | excellent | None |
| | 9 | 2.4 | 0.13 | Yes | 250°Cx2H | 32 | 94 | 10.0 | 0.4 | 0.8 | excellent | None |
| | 10 | 1.2 | 0.18 | Yes | 250°Cx8min. | 45 | 98 | 13.2 | 0.4 | 1.6 | excellent | None |
| Conventional Sample | 11 | 0 | 0.25 | No | None | 100 | 98 | 7.0 | 0.4 | 3.1 | | |
| Comparative Sample | 12 | 0 | 0.18 | Yes | 250°Cx2H | 100 | 46 | 5.2 | 0.4 | 1.6 | excellent | None |
| | 13 | 0.1 | 0.18 | Yes | 250°Cx2H | 93 | 87 | 6.0 | 0.4 | 1.6 | excellent | None |
| | 14 | 2.7 | 0.18 | Yes | 250°Cx2H | 23 | 97 | 15.8 | 0.4 | 1.6 | excellent | None |
| | 15 | 0.5 | 0.18 | No | None | 63 | 98 | 17.0 | 0.1 | 1.6 | inferior | disjointed |
| | 16 | 0.3 | 0.16 | No | 200°Cx2H | 80 | 85 | 11.5 | 0.2 | 1.4 | rather inferior | rather disjointed |

As clearly understood from Table 1, the inventive samples Nos. 1 to 10 were higher in breaking force than the conventional sample No. 11, while the same were lightened with weight values of about 1/3 to 2/3. The breaking force values of the comparative samples Nos. 12 and 13, containing smaller amounts of Sn, were extremely lower than those of the inventive samples. In the comparative sample No. 14 containing a larger amount of Sn, the conductivity value was significantly reduced although its breaking force was retained at a high level. The comparative samples Nos. 15 and 16, which were not circularly compressed, were inferior in wire straightness, and caused end disjointing.

All of the inventive samples Nos. 1 to 10 were heat treated after circular compression. Table 2 shows additional samples Nos. 17 to 19, which were prepared for the purpose of studying influence of such heat treatment as well as heat treatment conditions. Table 2 again shows the data of the inventive sample No. 1, in order to facilitate comparison.

Table 2

| No | Sn Content (wt.%) | Stand Diameter (mm) | Compression | Heat Treatment Condition | Conductivity (%) | Breaking Force Retention Rate(%) | Breaking Force (kgf) | Impact Value (kg m) | Weight (g/m) | Wire Straightness | End Disjointing |
|---|---|---|---|---|---|---|---|---|---|---|---|
| 1 | 0.5 | 0.18 | Yes | 220°Cx2H | 63 | 92 | 13.0 | 0.5 | 1.6 | Excellent | None |
| 17 | 0.5 | 0.18 | Yes | None | 61 | 98 | 14.0 | 0.1 | 1.6 | rather inferior | Rather Disjointed |
| 18 | 0.5 | 0.18 | Yes | 400°Cx2H | 63 | 50 | 7.0 | 0.4 | 1.6 | Excellent | None |
| 19 | 0.5 | 0.18 | Yes | 150°Cx2H | 63 | 97 | 13.9 | 0.2 | 1.6 | rather inferior | Rather Disjointed |

Comparing the heat treated sample No. 1 with the sample No. 17 which was not heat treated, it is understood that the impact value is improved and wire deformation and end disjointing are suppressed by performing heat treatment after circular compression, although the breaking force is slightly reduced.

In the sample No. 18 which was heat treated at 400°C, i.e., a temperature higher than 350°C, the breaking force retention rate was 50 %. Namely, the breaking force was reduced similarly to the

8

conventional sample No. 11. In the sample No. 19 which was heat treated at 150°C, i.e., a temperature lower than 180°C, the impact value was not much improved.

As understood from the above results, it is preferable to perform heat treatment after compression so that the tensile strength is in a range of 80 to 95 % of that before the heat treatment. Further, such heat treatment is preferably performed at a temperature of 180 to 350°C for at least 10 minutes.

Examples II to V according to the second embodiment of the present invention are now described.

Example II

Samples were prepared from phosphor bronze materials defined under JIS H 3110, as shown in Table 3. For each sample, seven strands were braided to form a stranded wire. The samples Nos. 2-1, 2-2 and 2-3 shown in Table 3 correspond to C5161, C5191 and C5121 under JIS H 3110 respectively. The conventional sample No. 2-4 was prepared from strands of copper wires containing no Sn and P. Comparative samples Nos. 2-5, 2-6 and 2-7 were prepared for the purpose of comparison.

Table 3 also shows conductivity values (IACS, %), breaking force retention rates (%) around heat treatment, breaking force values (kgf), impact values (kg•m), weight values (g/m), and states of wire straightness and end disjointing, which were measured or evaluated as to the samples.

Table 3

| No. | | Sn Content (wt.%) | P Content (wt.%) | Strand Diameter | Heat Treatment Condition | Conductivity (%) | Breaking Force Retention Rate (%) | Breaking Force (kgf) | Impact Value (kg m) | Weight (g/m) | Wire Straightness | End Disjointing |
|---|---|---|---|---|---|---|---|---|---|---|---|---|
| 2-1 | Inventive Sample | 4.1 | 0.08 | 0.18 | 300°Cx3H | 20 | 33 | 6.3 | 1.1 | 1.6 | Excellent | None |
| 2-2 | | 5.9 | 0.12 | 0.18 | 300°Cx3H | 15 | 50 | 9.5 | 1.2 | 1.6 | Excellent | None |
| 2-3 | | 7.9 | 0.20 | 0.18 | 300°Cx3H | 10 | 58 | 10.5 | 1.2 | 1.6 | Excellent | None |
| 2-4 | Conventional Sample | 0 | 0 | 0.2 | None | 100 | 98 | 4.5 | 0.4 | 2.0 | Excellent | None |
| 2-5 | Comparative Sample | 0 | 0 | 0.18 | 300°Cx3H | 100 | 38 | 4.0 | 0.4 | 1.6 | Excellent | None |
| 2-6 | | 1.3 | 0 | 0.18 | 300°Cx3H | 45 | 20 | 4.5 | 0.6 | 1.6 | Excellent | None |
| 2-7 | | 11.5 | 0 | 0.18 | 300°Cx3H | 8 | 59 | 11.5 | 1.2 | 1.26 | Inferior | Yes |

As clearly understood from Table 3, the inventive samples Nos. 2-1 to 2-3 were higher in breaking force and lower in weight than the conventional sample No. 2-4. The breaking force values of the comparative samples Nos. 2-5 and 2-6, containing smaller amounts of Sn, were extremely lower than those of the inventive samples. In the comparative sample No. 2-7 containing a larger amount of Sn, the conductivity value was extremely reduced although its breaking force was retained at a high level. Further, this sample

10

was inferior in wire straightness, and caused end disjointing.

All of the inventive samples Nos. 2-1 to 2-3 shown in Table 3 were heat treated after braiding. Table 4 shows additional samples Nos. 2-8 to 2-11, which were prepared for the purpose of studying influence of such heat treatment as well as heat treatment conditions. Table 4 again shows the data of the inventive sample No. 2-2, in order to facilitate comparison.

Table 4

| No. | Sn Content (wt.%) | P Content (wt.%) | Strand Diameter | Heat Treatment Condition | Conductivity (%) | Breaking Force Retention Rate (%) | Breaking Force (kgf) | Impact Value (kg m) | Weight (g/m) | Wire Straightness | End Disjointing |
|---|---|---|---|---|---|---|---|---|---|---|---|
| 2-2 | 5.9 | 0.12 | 0.18 | 300°Cx3H | 15 | 50 | 9.5 | 1.2 | 1.6 | Excellent | None |
| 2-8 | 5.9 | 0.12 | 0.18 | None | 14 | 98 | 19.2 | 0.1 | 1.6 | Inferior | Yes |
| 2-9 | 5.9 | 0.12 | 0.18 | 550°Cx3H | 15 | 17 | 3.2 | 0.4 | 1.6 | Excellent | None |
| 2-10 | 5.9 | 0.12 | 0.18 | 150°Cx3H | 15 | 97 | 18.6 | 0.2 | 1.6 | Inferior | Yes |
| 2-11 | 5.9 | 0.12 | 0.18 | 300°Cx5mm | 15 | 96 | 18.4 | 0.3 | 1.6 | Inferior | Yes |

Comparing the heat treated sample No. 2-2 with the sample No. 2-8 which was not heat treated, it is understood that the impact value is increased and wire deformation and end disjointing are suppressed by performing heat treatment after braiding, although the breaking force is reduced.

In the sample No. 2-9 which was heat treated at 550°C, i.e., a temperature higher than 500°C, the breaking force retention rate was 17 %. In the sample No. 2-10 which was heat treated at 150°C, i.e., a temperature lower than 180°C, the impact value was not much improved.

As clearly understood from the above results, the stranded wire is preferably heat treated after braiding so that its tensile strength is in a range of 30 to 60 % of that before heat treatment.

The sample No. 2-11 was heat treated at 300°C for 5 minutes. As the result, the impact value was reduced as compared with the sample No. 2-2, as shown in Table 4. Thus, the heat treatment is preferably performed for at least 10 minutes.

Example III

Samples were prepared from phosphor bronze materials defined under JIS H 3110 as shown in Table 5, similarly to Example II. For each sample, seven strands were braided to form a stranded wire. Except for that of the conventional sample No. 3-4, the stranded wires were passed through holes of dies to be circularly compressed, and heat treated under conditions shown in Table 5. The conventional sample No. 3-4 was prepared from a general stranded wire formed by braiding annealed copper wires, similarly to the conventional sample No. 2-4 shown in Table 3.

Table 5 also shows the characteristics of the as-formed stranded wires, which were measured or evaluated similarly to Example I.

Table 5

| No. | Sn Content (wt.%) | P Content (wt.%) | Strand Diameter | Compression | Heat Treatment Condition | Conductivity (%) | Breaking Force Retention Rate (%) | Breaking Force (kgf) | Impact Value (kg m) | Weight (g/m) | Wire Straightness | End Disjointing |
|---|---|---|---|---|---|---|---|---|---|---|---|---|
| 3-1 | 4.1 | 0.08 | 0.18 | Yes | 300°Cx3H | 20 | 33 | 6.3 | 1.3 | 1.55 | Excellent | None |
| 3-2 | 5.9 | 0.12 | 0.18 | Yes | 300°Cx3H | 15 | 50 | 9.5 | 1.4 | 1.55 | Excellent | None |
| 3-3 | 7.9 | 0.20 | 0.18 | Yes | 300°Cx3H | 10 | 58 | 10.5 | 1.4 | 1.55 | Excellent | None |
| 3-4 | 0 | 0 | 0.2 | No | None | 100 | 98 | 4.5 | 0.4 | 2.0 | Excellent | None |
| 3-5 | 0 | 0 | 0.18 | Yes | 300°Cx3H | 100 | 38 | 4.0 | 0.6 | 1.55 | Excellent | None |
| 3-6 | 1 | 0 | 0.18 | Yes | 300°Cx3H | 45 | 20 | 4.5 | 0.8 | 1.55 | Excellent | None |
| 3-7 | 11 | 0 | 0.18 | Yes | 300°Cx3H | 8 | 59 | 11.5 | 1.4 | 1.55 | Rather Inferior | Rather Disjointed |

Inventive Sample: 3-1, 3-2, 3-3
Conventional Sample: 3-4
Comparative Sample: 3-5, 3-6, 3-7

As clearly understood from 3, the inventive samples Nos. 3-1 to 3-3 were higher in breaking force and lower in weight than the conventional sample No. 3-4. The breaking force values of the comparative samples Nos. 3-5 and 3-6, which contained smaller amounts of Sn, were extremely lower than those of the inventive samples. The conductivity value of the comparative sample No. 3-7, which contained a larger amount of Sn, was extremely reduced although its breaking force was retained at a high level.

All of the inventive samples Nos. 3-1 to 3-3 shown in 5 were heat treated after circular compression. 6 shows additional samples Nos. 3-8 to 3-11, which were prepared for the purpose of studying influence of such heat treatment as well as heat treatment conditions. 6 again shows the data of the sample No. 3-2, in order to facilitate comparison.

Table 6

| No. | Sn Content (wt.%) | P Content (wt.%) | Strand Diameter | Compress-ion | Heat Treatment Condition | Conduct-ivity (%) | Breaking Force Retention Rate (%) | Breaking Force (kgf) | Impact Value (kg·m) | Weight (g/m) | Wire Straightness | End Disjointing |
|---|---|---|---|---|---|---|---|---|---|---|---|---|
| 3-2 | 5.9 | 0.12 | 0.18 | Yes | 300°Cx3H | 15 | 50 | 9.5 | 1.4 | 1.55 | Excellent | None |
| 3-8 | 5.9 | 0.12 | 0.18 | Yes | None | 14 | 98 | 19.5 | 0.2 | 1.55 | Rather Inferior | rather disjointed |
| 3-9 | 5.9 | 0.12 | 0.18 | Yes | 550°Cx3H | 15 | 17 | 3.2 | 0.6 | 1.55 | Excellent | None |
| 3-10 | 5.9 | 0.12 | 0.18 | Yes | 150°Cx3H | 15 | 97 | 18.6 | 0.4 | 1.55 | Rather Inferior | rather disjointed |
| 3-11 | 5.9 | 0.12 | 0.18 | Yes | 300°Cx5min | 15 | 96 | 18.4 | 0.5 | 1.55 | Rather Inferior | rather disjointed |

Comparing the heat treated sample No. 3-2 with the sample No. 3-8 which was not heat treated, it is understood that the impact value is improved and wire deformation and end disjointing are suppressed by performing heat treatment after circular compression, although the breaking force is slightly reduced.

In the sample No. 3-9 which was heat treated at 550°C, i.e., a temperature higher than 500°C, the breaking force retention rate was 17 % and the breaking force dropped below that of the conventional sample No. 3-4. In the sample No. 3-1 which was heat treated at 150°C, i.e., a temperature lower than 180°C, the impact value was not much improved.

As clearly understood from the above results, it is preferable to perform heat treatment after compression so that the tensile strength is in a range of 30 to 60 % of that before the heat treatment. In the sample No. 3-11 which was heat treated at 300°C for 5 minutes, it was impossible to attain a sufficient impact value. Thus, it is preferable to perform heat treatment for at least 10 minutes.

Example IV

Samples were prepared from copper alloys containing Sn in amounts shown in 7. For each sample, seven strands were braided to form a stranded wire. The conventional sample No. 4-7 shown in 7 is identical to the conventional samples Nos. 2-4 and 3-4 shown in Tables 3 and 5.

# EP 0 457 186 B1

7 also shows the characteristics of the samples, which were evaluated similarly to Examples II and III.

Table 7

| | No. | Sn Content (wt.%) | Strand Diameter | Heat Treatment Condition | Conductivity (%) | Breaking Force Retention Rate(%) | Breaking Force (kgf) | Impact Value (kg m) | Weight (g/m) | Wire Straightness | End Disjointing |
|---|---|---|---|---|---|---|---|---|---|---|---|
| Inventive Sample | 4-1 | 2.2 | 0.18 | 300°Cx3H | 35 | 26 | 5.0 | 1.0 | 1.6 | Excellent | None |
| | 4-2 | 4.3 | 0.18 | 300°Cx3H | 20 | 33 | 6.3 | 1.1 | 1.6 | Excellent | None |
| | 4-3 | 6.1 | 0.18 | 300°Cx3H | 15 | 50 | 9.5 | 1.2 | 1.6 | Excellent | None |
| Conventional Sample | 4-4 | 3.1 | 0.18 | 300xx3H | 25 | 30 | 5.8 | 1.1 | 1.6 | Excellent | None |
| Comparative Sample | 4-5 | 7.2 | 0.13 | 300°Cx3H | 12 | 55 | 5.5 | 1.0 | 0.8 | Excellent | None |
| | 4-6 | 5.3 | 0.18 | 300°Cx3H | 18 | 39 | 7.5 | 1.1 | 1.6 | Excellent | None |
| | 4-7 | 0 | 0.2 | 300°Cx3H | 100 | 98 | 4.5 | 0.4 | 2.0 | Excellent | None |
| | 4-8 | 0 | 0.18 | 300°Cx3H | 100 | 38 | 4.0 | 0.4 | 1.6 | Excellent | None |
| | 4-9 | 1.3 | 0.18 | 300°Cx3H | 45 | 20 | 4.5 | 0.6 | 1.6 | Excellent | None |
| | 4-10 | 11.5 | 0.18 | 300°Cx3H | 8 | 59 | 11.5 | 1.2 | 1.6 | Inferior | disjointed |

As clearly understood from 7, the inventive samples Nos. 4-1 to 4-6 were higher in breaking force and lower in weight than the conventional sample No. 4-7. The breaking force values of the comparative samples Nos. 4-8 and 4-9, containing smaller amounts of Sn, were lower than those of the inventive

16

samples. The conductivity value of the comparative sample No. 4-10, containing a larger amount of Sn, was extremely reduced although its breaking force was retained at a high level. Further, this sample was inferior in wire straightness, and caused end disjointing.

All of the samples Nos. 4-1 to 4-6 shown in 7 were heat treated. 8 shows additional samples Nos. 4-11 to 4-14, which were prepared for the purpose of studying influence of such heat treatment as well as heat treatment conditions. 8 again shows the data of the sample No. 4-3, in order to facilitate comparison.

Table 8

| No. | Sn Content (wt.%) | Strand Diameter(mm) | Heat Treatment Condition | Conductivity (%) | Braking Force Retention Rate(%) | Breaking Force (kgf) | Impact Value (kg m) | Weight (g/m) | Wire Straightness | End Disjointing |
|---|---|---|---|---|---|---|---|---|---|---|
| 4-3 | 6.1 | 0.18 | 300°Cx3H | 15 | 50 | 9.5 | 1.2 | 1.6 | Excellent | None |
| 4-11 | 6.1 | 0.18 | None | 14 | 98 | 19.2 | 0.1 | 1.6 | Inferiort | Disjointed |
| 4-12 | 6.1 | 0.18 | 550°Cx3H | 15 | 17 | 3.2 | 0.4 | 1.6 | Excellent | None |
| 4-13 | 6.1 | 0.18 | 150°Cx3H | 15 | 97 | 18.6 | 0.2 | 1.6 | Inferior | Disjointed |
| 4-14 | 6.1 | 0.18 | 300°Cx5min | 15 | 96 | 18.4 | 0.3 | 1.6 | Inferior | Disjointed |

Comparing the heat treated sample No. 4-3 with the sample No. 4-11 which was not heat treated, it is clearly understood that the impact value is improved and wire deformation and end disjointing are suppressed by performing heat treatment after braiding, although the breaking force is slightly reduced.

In the sample No. 4-12 which was heat treated at 550°C, i.e., a temperature higher than 500°C, the breaking force retention rate was 17 % and the breaking force dropped below that of the conventional

18

sample. In the sample No. 4-13 which was heat treated at 150 °C, i.e., a temperature lower than 180 °C, the impact value was not much improved.

As clearly understood from the above results, it is preferable to perform heat treatment after compression so that the tensile strength is in a range of 30 to 60 % of that before the heat treatment. Further, such heat treatment is preferably performed at a temperature of 180 to 500 °C for at least 10 minutes.

Example V

Samples were prepared from copper materials having Sn contents shown in 9. For each sample, seven strands were braided to form a stranded wire. Such stranded wires were compressed similarly to Example III.

9 also shows the characteristics of the as-formed stranded wires.

Table 9

| | No. | Sn Content (wt.%) | Strand Diameter (mm) | Compression | Heat Treatment Condition | Conductivity (%) | Breaking Force Retention Rate (%) | Breaking Force (kgf) | Impact Value (kg m) | Weight (g/m) | Wire Straightness | End Disjointing |
|---|---|---|---|---|---|---|---|---|---|---|---|---|
| Inventive Sample | 5-1 | 2.2 | 0.18 | Yes | 300°Cx3H | 35 | 26 | 5.0 | 1.2 | 1.55 | Excellent | None |
| | 5-2 | 4.3 | 0.18 | Yes | 300°Cx3H | 20 | 33 | 6.3 | 1.3 | 1.55 | Excellent | None |
| | 5-3 | 6.1 | 0.18 | Yes | 300°Cx3H | 15 | 50 | 9.5 | 1.4 | 1.55 | Excellent | None |
| | 5-4 | 3.1 | 0.18 | Yes | 300°Cx3H | 25 | 30 | 5.8 | 1.3 | 1.55 | Excellent | None |
| | 5-5 | 8.2 | 0.13 | Yes | 300°Cx3H | 12 | 55 | 5.5 | 1.2 | 0.8 | Excellent | None |
| | 5-6 | 5.3 | 0.18 | Yes | 300°Cx3H | 18 | 39 | 1.1 | 1.3 | 1.55 | Excellent | None |
| Conventional Sample | 5-7 | 0 | 0.2 | No | None | 100 | 98 | 4.5 | 0.4 | 2.0 | Excellent | None |
| Comparative Sample | 5-8 | 0 | 0.18 | Yes | 300°Cx3H | 100 | 38 | 4.0 | 0.4 | 1.55 | Excellent | None |
| | 5-9 | 1.3 | 0.18 | Yes | 300°Cx3H | 45 | 20 | 4.5 | 0.6 | 1.55 | Excellent | None |
| | 5-10 | 11.5 | 0.18 | Yes | 300°Cx3H | 8 | 59 | 11.5 | 1.4 | 1.55 | Rather Inferior | Rather Disjointed |

As clearly understood from 9, the inventive samples Nos. 5-1 to 5-6 were higher in breaking force and lower in weight than the conventional sample No. 5-7. The breaking force values of the comparative samples Nos. 5-8 and 5-9, containing smaller amounts of Sn, were lower than those of the inventive samples. The conductivity value of the sample No. 5-10, containing a larger amount of Sn, was extremely reduced although its breaking force was retained at a high level.

All of the samples Nos. 5-1 to 5-6 shown in 9 were heat treated after circular compression. 10 shows additional samples Nos. 5-11 to 5-14, which were prepared for the purpose of studying influence of such heat treatment as well as heat treatment conditions. 10 again shows the data of the sample No. 5-3, in order to facilitate comparison.

Table 10

| No. | Sn Content (wt.%) | Strand Diameter (mm) | Compression | Heat Treatment Condition | Conductivity (%) | Breaking Force Retention Rate (%) | Breaking Force (kgf) | Impact Value (kg m) | Weight (g/m) | Wire Straightness | End Disjointing |
|---|---|---|---|---|---|---|---|---|---|---|---|
| 5-3 | 6.1 | 0.18 | Yes | 300°Cx3H | 15 | 50 | 9.5 | 1.4 | 1.55 | Excellent | None |
| 5-11 | 6.1 | 0.18 | Yes | None | 14 | 98 | 19.5 | 0.2 | 1.55 | Rather Inferior | Rather Disjointed |
| 5-12 | 6.1 | 0.18 | Yes | 550°Cx3H | 15 | 18 | 3.5 | 1.0 | 1.55 | Excellent | None |
| 5-13 | 6.1 | 0.18 | Yes | 150°Cx3H | 15 | 97 | 19.3 | 0.3 | 1.55 | Rather Inferior | Rather Disjointed |
| 5-14 | 6.1 | 0.18 | Yes | 300°Cx5min | 15 | 97 | 19.1 | 0.4 | 1.55 | Rather Inferior | Rather Disjointed |

Comparing the heat treated sample No. 5-3 with the sample No. 5-11 which was not heat treated, it is understood that the impact value is improved and wire deformation and end disjointing are suppressed by performing heat treatment after circular compression, although the breaking force is slightly reduced.

In the sample No. 5-12 which was heat treated at 550°C, i.e., a temperature higher than 500°C, the breaking force retention rate was 18 % and the breaking force dropped below that of the conventional

22

sample. In the sample No. 5-13 which was heat treated at 150°C, i.e., a temperature lower than 180°C, the impact value was not much improved.

In the sample No. 5-14 which was heat treated for 5 minutes, the impact value was not much improved.

As clearly understood from the above results, it is preferable to perform heat treatment after compression so that the tensile strength is in a range of 30 to 60 % of that before the heat treatment. Further, such heat treatment is preferably performed at a temperature of 180 to 500°C for at least 10 minutes.

Although the present invention has been described and illustrated in detail, it is clearly understood that the same is by way of illustration and example only and is not to be taken by way of limitation, the spirit and scope of the present invention being limited only by the terms of the appended claims.

**Claims**

1.  A wire conductor for a harness comprising a stranded wire having a conductor sectional area of 0.03 to 0.3 mm$^2$, said stranded wire being formed by braiding strands of a copper alloy containing 0.2 to 10 % by weight of Sn, wherein said stranded wire is circularly compressed after the same is formed by braiding strands having circular sections **characterized in that** the Sn content is 0.2 to 2.5 percent by weight and said circularly compressed stranded wire is heat treated so that its tensile strength is in a range of 80 to 95 % of that before heat treatment.

2.  A wire conductor for a harness in accordance with claim 1, wherein said copper alloy contains phosphorus in an amount of not more than 0.5 percent by weight.

3.  A wire conductor for a harness in accordance with one of the proceeding claims wherein said heat treatment is performed at a temperature of 180 to 350°C for at least 10 minutes.

4.  A wire conductor for a harness in accordance with one of the proceeding claims, wherein the Sn content is 2 to 10 % by weight.

5.  A wire conductor for a harness in accordance with claim 4, wherein said stranded wire is heat treated so that its tensile strength is in a range of 30 to 60% as compared with that before heat treatment.

6.  A wire conductor for a harness in accordance with claim 5, wherein said heat treatment is performed at a temperature of 180 to 500°C for at least 10 minutes.

**Patentansprüche**

1.  Leiterdraht für einen Kabelbaum, der einen Litzendraht mit einer Leiterquerschnittsfläche von 0,03 bis 0,3 mm$^2$ aufweist, wobei der Litzendraht durch Verflechten von Strängen einer Kupferlegierung, die 0,2 bis 10 Gew.-% Sn enthält, gebildet ist, wobei der Litzendraht kreisförmig zusammengepreßt wird, nachdem dieser durch Verflechten von Strängen mit kreisförmigen Querschnitten gebildet ist, **dadurch gekennzeichnet, daß** der Sn-Gehalt 0,2 bis 2,5 Gew.-% beträgt und daß der kreisförmige zusammengepreßte Litzendraht wärmebehandelt ist, so daß seine Zugfestigkeit in einem Bereich von 80 bis 95% derer vor der Wärmebehandlung liegt.

2.  Leiterdraht für einen Kabelbaum nach Anspruch 1, **dadurch gekennzeichnet, daß** die Kupferlegierung Phosphor in einer Menge von nicht mehr als 0,5 Gew.-% enthält.

3.  Leiterdraht für einen Kabelbaum nach einem der vorhergehenden Ansprüche, **dadurch gekennzeichnet, daß** die Wärmebehandlung bei einer Temperatur von 180 bis 350°C für wenigstens 10 Minuten durchgeführt wird.

4.  Leiterdraht für einen Kabelbaum nach einem der vorhergehenden Ansprüche, **dadurch gekennzeichnet, daß** der Sn-Gehalt 2 bis 10 Gew.-% beträgt.

5.  Leiterdraht für einen Kabelbaum nach Anspruch 4, **dadurch gekennzeichnet, daß** der Litzendraht wärmebehandelt ist, so daß seine Zugfestigkeit im Vergleich zu der vor der Wärmebehandlung in einem Bereich von 30 bis 60 % liegt.

6. Leiterdraht für einen Kabelbaum nach Anspruch 5, **dadurch gekennnzeichnet, daß** die Wärmebehandlung bei einer Temperatur von 180 bis 500°C für wenigstens 10 Minuten durchgeführt wird.

**Revendications**

1. Fil conducteur pour faisceaux de câblage comprenant un fil toronné ou torsadé ayant une section de conducteur de 0,03 jusqu'à 0,3 mm$_2$, ce fil toronné étant constitué par des torons tressés d'un alliage de cuivre contenant 0,2 à 10 % en poids de Sn, dans lequel le fil toronné est comprimé circulairement après sa formation en torons tressés ayant des sections circulaires, caractérisé en ce que la teneur en Sn est de 0,2 à 2,5 % en poids et le fil toronné comprimé circulairement est traité thermiquement de telle sorte que sa résistance à la rupture par traction se situe dans la plage de 80 à 95 % de celle avant traitement thermique.

2. Fil conducteur destiné à un faisceau de câble selon la revendication 1, dans lequel l'alliage de cuivre contient du phosphore dans une quantité ne dépassant pas 0,5 % en poids.

3. Fil conducteur pour faisceaux de câblage selon l'une des revendications précédentes, dans lequel le traitement thermique est effectué à une température de 180 à 350°C pendant au moins 10 minutes.

4. Fil conducteur pour faisceaux de câblage selon l'une des revendications précédentes, dans lequel la teneur en Sn est de 2 à 10 % en poids.

5. Fil conducteur pour faisceaux de câblage selon la revendication 4, dans lequel le fil toronné est traité thermiquement de telle sorte que sa résistance à la rupture par traction se situe dans la plage de 30 à 60 % par rapport à celle avant le traitement thermique.

6. Fil conducteur pour faisceaux de câblage selon la revendication 5, dans lequel le traitement thermique est conduit à une température de 180 à 500°C pendant au moins 10 minutes.

FIG. 1

FIG. 2